(19) Europäisches Patentamt / European Patent Office / Office européen des brevets

(11) **EP 2 713 198 A1**

(12) **DEMANDE DE BREVET EUROPEEN**

(43) Date de publication:
**02.04.2014 Bulletin 2014/14**

(51) Int Cl.:
***G02C 7/06*** (2006.01)

(21) Numéro de dépôt: **13186590.9**

(22) Date de dépôt: **30.09.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **28.09.2012 FR 1259227**

(71) Demandeur: **Thomas Sinclair Laboratoires 75015 Paris (FR)**

(72) Inventeur: **Jacquot, Yves 75004 Paris (FR)**

(74) Mandataire: **Osha Liang SARL 32, avenue de l'Opéra 75002 Paris (FR)**

(54) **Lentille ophtalmique progressive pour patient souffrant de deficience visuelle**

(57) Selon un aspect, l'invention concerne une lentille ophtalmique progressive (1) pour patient souffrant de déficience visuelle. La lentille comprend :
- une zone de centrage (402), ponctuelle ou quasi-ponctuelle, définie par la région de la lentille destinée, après montage de la lentille dans une monture d'une paire de lunettes, à être traversée par une direction du regard sensiblement horizontale d'un porteur lorsque ce porteur est debout et regarde au loin droit devant lui,
- une zone de référence pour la vision de près (404), définie dans une région inférieure de la lentille par rapport à la zone de centrage, la puissance équivalente variant de façon continue sur une ligne méridienne (400) entre la zone de centrage et un point central (VP) de la zone de référence pour la vision de près, la puissance équivalente résiduelle dans la zone de centrage après correction de l'amétropie étant comprise strictement entre 0,25 et 1 dioptrie.

FIG.4A

FIG.4B

**Description**

**DOMAINE DE L'INVENTION**

La présente invention concerne une lentille ophtalmique progressive pour patient souffrant de déficience visuelle, et notamment de dégénérescence maculaire liée à l'âge (DMLA), que le patient soit presbyte ou non presbyte.

**ETAT DE L'ART**

Il est connu pour les patients souffrant de presbytie des lentilles ophtalmiques progressives présentant une puissance optique variable entre des points de celle-ci, de telle sorte que la correction du défaut visuel qui est apportée par la lentille soit adaptée en fonction de l'éloignement d'un objet qui est observé par le patient.
De nombreux documents décrivent de telles lentilles ophtalmiques progressives, comme par exemple la demande de brevet français publiée FR2924824.

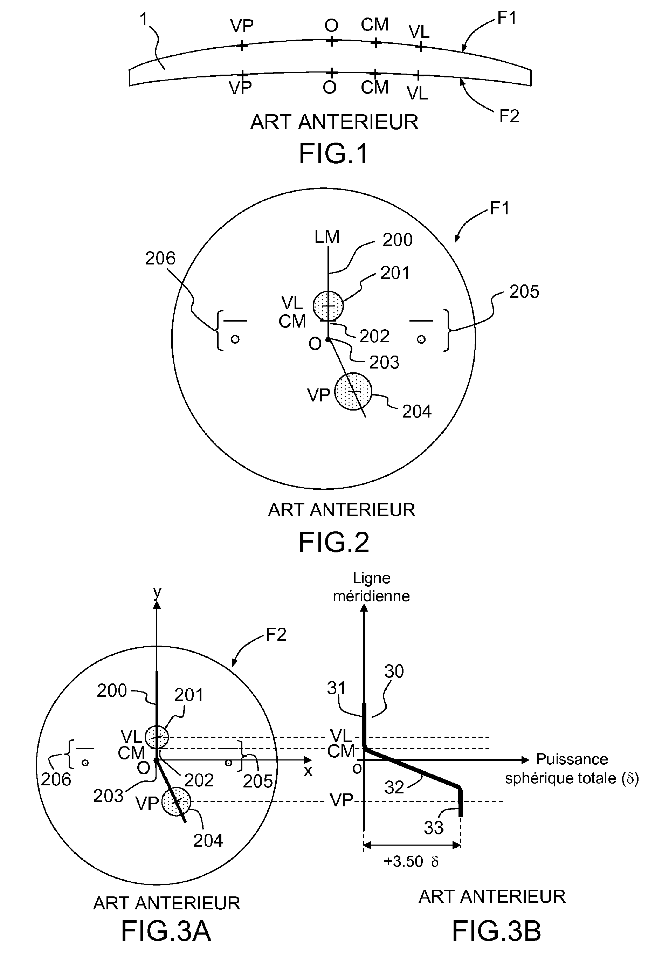

Les figures 1 à 3 illustrent ainsi respectivement une lentille ophtalmique progressive vue en coupe, une cartographie d'un verre du type de celui de la figure 1 et la puissance sphérique totale mesurée le long de la ligne méridienne d'une lentille ophtalmique progressive, dans un exemple classique de lentille ophtalmique progressive.
La figure 1 illustre une lentille ophtalmique progressive 1, appelé aussi « verre progressif» dans la suite de la demande, adapté pour le montage sur des lunettes ophtalmiques. De telles lentilles ophtalmiques progressives, généralement circulaires ou elliptiques, sont fournies à l'homme de l'art qui pourra procéder au détourage des verres en fonction du calibre de la monture utilisée pour les lunettes ophtalmiques et des paramètres physiologiques du patient, ou porteur, de telle sorte à assurer un parfait centrage des verres ophtalmiques progressifs une fois taillés et montés sur la monture de la paire de lunettes, avec la position horizontale et verticale du centre des yeux du porteur lorsque ce dernier regarde devant lui au loin.
La lentille référencée 1 sur la figure 1 est fabriquée dans un matériau d'indice n, par exemple du polycarbonate d'indice n = 1,59 et comprend une face avant F1 (ou face antérieure) destinée à être la plus éloignée de l'oeil une fois montée sur des lunettes, et une face arrière F2 (ou face postérieure) destinée à être la plus proche de l'oeil. La figure 2 illustre une cartographie d'une face avant F1 d'un verre progressif de type connu. On définit classiquement en ophtalmologie un point de référence prismatique de la lentille, noté O sur les figures 1 et 2, et appelé parfois « centre optique » de la lentille, qui correspond au point de référence pour la mesure de l'éventuel prisme d'allégement de la lentille progressive. Le point de référence prismatique O est référencé 203 sur la cartographie représentée sur la figure 2. On définit également un point CM dit croix de montage, représenté par une croix 202 sur la figure 2, et utilisé par l'homme de l'art, par exemple l'opticien, pour le centrage du verre et le montage sur la monture des lunettes. La croix de montage sert donc à ajuster une position du verre par rapport au centre de la pupille du porteur. Les cercles référencés 201 et 204 sur la figure 2, et représentés par leurs centres VL et VP sur la figure 1, définissent respectivement des zones de référence de vision de loin et de vision de près. Plus précisément, les points VL et VP sont des points de référence auxquels sont associés une valeur de puissance optique adaptée pour corriger la vision du porteur lorsqu'il regarde soit un objet éloigné (vision de loin), typiquement situé à plus de deux mètres de lui, soit un objet rapproché (vision de près), typiquement situé à environ quarante centimètres de ses yeux. L'homme de l'art utilise les zones de référence définies par les cercles 201 et 204 pour contrôler les puissances optiques de correction en vision de loin et en vision de près, en les mesurant par exemple au moyen d'un frontofocomètre. Les zones de référence de vision de loin et de vision de près sont des zones parfaitement définies sur le verre ophtalmique ; elles sont en général repérées par l'homme de l'art grâce au guide technique du fabricant et/ou grâce aux repères indiqués sur le verre. Enfin on définit usuellement une ligne appelée ligne méridienne (LM) et référencée 200 sur la figure 2 qui joint les points VL, CM, O, VP respectivement. Elle correspond à la trace sur le verre progressif de la direction du regard lorsque le porteur observe successivement des objets qui sont situés devant lui à des hauteurs et à des distances variables. Sur la figure 2, les références 205, 206 correspondent à des repères et gravures effectués sur le verre et utilisé par l'homme de l'art pour l'alignement horizontal du verre, la détermination du centre optique et de la croix de montage, ainsi que la lecture de différentes informations.
Plus précisément, la procédure habituellement utilisée par l'homme de l'art pour le montage de verres ophtalmiques progressifs est la suivante. La monture choisie pour la paire de lunettes (sans les verres) est tout d'abord portée par le patient, afin de repérer par rapport au calibre de la monture, la position horizontale et verticale du centre des yeux du patient lorsque ce dernier regarde devant lui au loin. La croix de montage de chacun des verres ophtalmiques progressifs est par ailleurs repérée par exemple grâce aux repères et gravures effectuées sur le verre et/ou à un guide technique d'utilisation accompagnant les verres progressifs, et sa localisation transmise à la machine de détourage. La forme du calibre de la monture est numérisée (numérisation 2D ou 3D des cotes du calibre supportant les verres) afin que la machine de détourage puisse enregistrer la forme exacte de la monture. Les paramètres de centrage horizontaux et verticaux mesurés sur le patient avec la monture sont également indiqués à la machine de détourage. La machine peut alors calculer et tailler les verres progressifs de telle sorte qu'une fois ces derniers montés sur la monture des lunettes, la croix de montage de chaque verre soit confondue avec la région du verre traversée par une direction du regard sensiblement horizontale d'un porteur lorsque ce porteur est debout et regarde au loin droit devant lui. L'homme de l'art n'a alors plus qu'à monter les verres taillés sur la monture. Avant d'effacer les éventuels repères (par exemple les références 205, 206) indiqués sur les verres progressifs, l'homme de l'art peut être amené à vérifier sur le patient que la croix de montage coïncide bien avec la position de regard au loin du patient. Après vérification, les repères sont effacés et le produit final livré.

Bien que l'ensemble des points ou zones remarquables aient été définies sur la face avant F1, ces points peuvent être définis de la même manière sur la face arrière F2. Par exemple, les points de référence de la face F2 peuvent être définis à partir des points O, CM, VL et VP de la face F1 en utilisant le trajet de rayons lumineux qui passent par ces points. De façon générale dans la suite de la description, on pourra définir à partir d'un point P donné sur la face F1 un point P sur la face F2, relié au point P sur la face F1 par le trajet d'un rayon lumineux issu de l'infini qui relie ces points. On définira dans la suite de la description un « point P » du verre par la zone qui relie le point P de la face F1 et le point P de la face F2.

Ainsi, on peut repérer sur l'une ou l'autre des faces avant F1 et arrière F2 (voir figure 3A) deux axes cartésiens exprimés en millimètres : x pour l'axe horizontal et y pour l'axe vertical, ce dernier étant usuellement orienté vers le haut. Usuellement, le point de référence prismatique O est le centre de ce repère. Typiquement, le point CM a pour coordonnées x = 0 et y = 2 à 4 mm. Les zones de référence pour la mesure de la puissance en vision de loin et en vision de près doivent être suffisamment grandes pour permettre une mesure fiable de la puissance optique, par exemple au moyen d'un frontofocomètre. Typiquement, le diamètre des cercles 201, 204 (figure 2) est de 8 à 10 mm. La zone de référence pour la mesure de la puissance optique en vision de loin (201) doit être prise la plus proche possible du point CM mais suffisamment éloignée pour se trouver dans une zone stable en puissance optique. Typiquement, la zone de référence de vision de loin 201 est prise tangente au point CM et le point VL centre de la zone de vision de loin a pour coordonnées x = 0 et y = 6 à 9 mm. Le point VL est donc situé sur une ligne verticale au-dessus de O. Le point VP centre de la zone de vision de près (204) est situé en-dessous de O, décalé latéralement selon l'axe x par rapport à VL. Il est connu en effet que la vision de près provoque une convergence des yeux, ce qui explique que classiquement la zone de vision de près est également décalée horizontalement en nasal.

Il est courant en optique ophtalmique (voir par exemple Yves Le Grand, « Optique Physiologique », Tome 1 : « la dioptrique de l'oeil et sa correction », Edition Masson, 1964) de caractériser une surface d'une lentille ophtalmique en tout point par une puissance sphérique, une puissance cylindrique et un Axe. La puissance sphérique (Sph) et la puissance cylindrique (Cyl) sont données en dioptries et l'Axe qui caractérise l'axe du cylindre, est donné en degrés. La puissance optique en tout point est ainsi définie par un triplet (Sph, Cyl, Axe). Chaque face F1 et F2 du verre ophtalmique 1 peut ainsi être caractérisée en tout point par une puissance optique définie respectivement par le triplet $(Sph_1, Cyl_1, Axe_1)$ et par le triplet $(Sph_2, Cyl_2, Axe_2)$.

De façon plus précise, on peut définir selon une approximation au $3^{ème}$ ordre des surfaces F1 et F2, les paramètres de puissance sphérique $Sph_1$ et cylindrique $Cyl_1$ en tout point P de la face avant F1, et les paramètres de puissance sphérique $Sph_2$ et cylindrique $Cyl_2$ en tout point correspondant de la face arrière F2, par les formules suivantes (en prenant comme sens positif pour la mesure des rayons le sens de propagation de la lumière de la face avant F1 vers la face arrière F2):

$$Sph_1 = (n-1)/2 * (1/R_{max} + 1/R_{min}) \qquad (1)$$

$$Cyl_1 = (n-1) * (1/R_{max} - 1/R_{min}) \qquad (2)$$

$$Sph_2 = (1-n)/2 * (1/R_{max} + 1/R_{min}) \qquad (3)$$

$$Cyl_2 = (1-n) * (1/R_{max} - 1/R_{min}) \qquad (4)$$

Où $R_{min}$ et $R_{max}$ désignent respectivement en un point P donné d'une face les rayons de courbure minimal et maximal de la surface au point P, mesurés selon deux directions perpendiculaires repérées par une direction définie par l'Axe en ce point.

A partir des paramètres de puissance sphérique, cylindrique et d'Axe en tout point de chaque face F1, F2, on peut calculer la puissance optique totale $(Sph_T, Cyl_T, Axe_T)$ en un point P du verre, les paramètres du triplet $(Sph_T, Cyl_T,$

Axe$_T$) étant calculés de façon connue à partir des paramètres des triplets (Sph$_1$, Cyl$_1$, Axe$_1$) et (Sph$_2$, Cyl$_2$, Axe$_2$).

On peut également définir sur chacune des faces F1 et F2 ainsi que pour le verre, des puissances optiques équivalentes, appelées plus simplement puissances équivalentes dans la suite de la description et notées PE$_1$, PE$_2$ et PE$_T$, définies en un point P respectivement par :

$$PE_1 = Sph_1 + Cyl_1 /2 \qquad\qquad (5)$$

$$PE_2 = Sph_2 + Cyl_2 /2 \qquad\qquad (6)$$

$$PE_T = Sph_T + Cyl_T /2 \qquad\qquad (7)$$

Classiquement dans les lentilles ophtalmiques progressives de l'art antérieur, la face avant F1 de la lentille 1 peut être une surface de série, obtenue lors du moulage de la lentille et présenter une forme sphérique, tandis que la face arrière F2 est usinée pour former une surface complexe et conférer les caractéristiques optiques recherchées à la lentille. Dans ce cas, la puissance cylindrique est nulle en tout point de la face F1 (sphérique) et la puissance sphérique est constante sur toute la face F1. La puissance totale du verre en un point donné est définie dans ce cas par le triplet (Sph$_T$, Cyl$_T$, Axe$_T$), où :

$$Sph_T = Sph_1 + Sph_2 \qquad\qquad (8)$$

$$Cyl_T = Cyl_2 \qquad\qquad (9)$$

$$Axe_T = Axe_2 \qquad\qquad (10)$$

La figure 3B illustre dans un cas de verre progressif classique, la puissance sphérique totale du verre mesurée selon la ligne méridienne LM pour un patient emmétrope, définie par la somme des puissances sphériques de chaque verre (équation 8). Dans le cas d'un verre progressif classique, il est courant de chercher à minimiser la puissance cylindrique le long de la ligne méridienne. Une caractérisation du verre par la puissance sphérique totale est donc suffisante.

La puissance sphérique totale 30 se décompose classiquement en plusieurs segments notés 31, 32, 33 sur la figure 3B. Lorsque le patient regarde au loin droit devant lui, dans une position naturelle, l'axe du regard coupe le verre au niveau du point CM et le verre procure une correction nulle (puissance sphérique totale égale à 0), idéale en vision de loin pour un patient emmétrope. C'est le cas aussi si le patient regarde au-dessus (segment 31). Si le patient cherche à regarder de près, au centre de son champ de vision binoculaire, il va regarder vers le bas, sans changer la position de sa tête. Sa ligne de regard va atteindre la zone de vision de près 204 centrée sur le point VP, lui procurant un surcroit de puissance permettant la mise au point (segment 33). Ce surcroit de puissance est nommé Addition du verre (Add). C'est la différence entre la puissance en vision de près et la puissance en vision de loin procurées par le verre de correction. Dans le cas de l'exemple de la figure 3B, l'addition est de + 3.50 dioptries. Entre la position de vision de loin et la position de vision de près, la puissance du verre évolue continment le long de la méridienne (segment 32). Cette zone permet la vision intermédiaire (VI). En fonction de l'objet à observer, le patient va abaisser plus ou moins le regard jusqu'à ce que son axe visuel tombe sur une zone dont la puissance lui permette la mise au point. Classiquement, il est connu que plus le regard s'abaisse, plus la puissance optique le long de la génératrice augmente. Il est également connu que, dans cette zone, la qualité optique se dégrade lorsque l'axe du regard s'éloigne à l'horizontal depuis la méridienne. La figure 3B illustre le profil de la puissance sphérique totale dans le cas d'un patient emmétrope. Dans le cas d'un patient amétrope (myope ou hypermétrope), le profil de la puissance sphérique peut être sensiblement le même mais décalé horizontalement vers les puissances positive ou négative, de telle sorte qu'en vision de loin (segment 31), le verre procure la puissance nécessaire à la correction de l'amétropie.

Dans un verre progressif, la position de la zone de vision de près (zone référencée 204) doit respecter certaines contraintes et notamment le confort du patient. En particulier, l'inclinaison du regard en vision de près ne doit pas dépasser une valeur angulaire maximale, typiquement 30°, au-delà de laquelle l'effort musculaire sur les yeux devient inconfortable. Cette contrainte notamment limite l'addition maximale des verres progressifs à des valeurs en général comprises autour de + 3.50 dioptries car il n'est pas possible de générer entre deux zones de distance réduite entre elles une variation de puissance optique plus grande, au risque de voir augmenter de façon trop importante les aberrations optiques.

La demande de brevet EP 2 428 834 décrit une méthode de conception de lentilles ophtalmiques progressives, dans laquelle le point de départ de la zone de variation de puissance varie en fonction de la valeur de l'addition. Selon cette méthode, il est préconisé de maintenir l'addition entre +0.50 dioptries et +2.25 dioptries.

On comprend ainsi qu'un verre progressif classique est idéal pour un patient présentant une bonne vision (après correction de l'amétropie) mais n'est pas adapté à un patient souffrant de déficience visuelle. En effet, un patient souffrant de déficience visuelle ne pourra pas profiter de la correction apportée par le verre en vision de loin, du fait de la déficience de l'oeil, et continuera à être gêné en vision intermédiaire ou en vision de près par l'addition limitée des verres progressifs.

L'invention propose une lentille ophtalmique progressive spécialement adaptée pour un patient souffrance de déficience visuelle.

## RESUME DE L'INVENTION

Selon un premier aspect, l'invention concerne une lentille ophtalmique progressive pour patient souffrant de déficience visuelle comprenant :

- une zone de centrage, ponctuelle ou quasi-ponctuelle, définie par la région de la lentille destinée, après montage de la lentille dans une monture d'une paire de lunettes, à être traversée par une direction du regard sensiblement horizontale d'un porteur lorsque ce porteur est debout et regarde au loin droit devant lui,
- une zone de référence pour la vision de près, définie dans une région inférieure de la lentille par rapport à la zone de centrage, la puissance équivalente variant de façon continue sur une ligne méridienne entre la zone de centrage et un point central de la zone de référence pour la vision de près,
- une zone de référence pour la vision de loin, définie dans une zone supérieure de la lentille par rapport à la zone de centrage, dans laquelle la puissance équivalente résiduelle après correction de l'amétropie est inférieure à 0,25 dioptrie.

Selon le premier aspect, l'addition, définie par la différence entre la puissance équivalente totale mesurée au niveau de la zone de référence pour la vision de près et la puissance équivalente totale mesurée au niveau de la zone de référence pour la vision de loin, est strictement comprise entre + 3,50 et +6,50 ; elle est selon une variante supérieure ou égale à +4,00 et strictement inférieure à +6,50, par exemple comprise au sens large entre +4,00 et +6,00, ces valeurs d'addition permettant à une catégorie au moins de patients déficients visuels de recouvrer en vision de près une acuité visuelle leur permettant la lecture fluide de caractères.

Par ailleurs, la puissance équivalente résiduelle dans la zone de centrage après correction de l'amétropie est comprise entre +0,25 et +1 dioptrie, la puissance équivalente variant de façon continue entre la zone de centrage et un point central de la zone de référence pour la vision de loin.

Avantageusement, la puissance équivalente résiduelle dans la zone de centrage après correction de l'amétropie est comprise au sens large entre +0,50 et +0,75 dioptrie, ce qui permet de limiter les effets de distorsion.

La déposante a montré que contrairement à l'idée reçue de devoir corriger parfaitement l'amétropie du patient dans la zone de centrage (confondue avec la croix de montage classiquement utilisée par les opticiens), il est approprié pour un patient souffrant de déficience visuelle d'introduire une puissance équivalente résiduelle non nulle au niveau de la zone de centrage, ce qui permettra notamment d'augmenter l'addition et d'augmenter la puissance équivalente en vision intermédiaire et en vision de près sans pour autant détériorer la vision du patient.

Selon une variante, la puissance équivalente varie avec une pente de variation moyenne entre la zone de centrage et le point central de la zone de référence pour la vision de près plus forte que la pente de variation moyenne entre la zone de centrage et le point central de la zone de référence pour la vision de loin.

Cette configuration permet de limiter la puissance équivalente résiduelle au niveau de la zone de centrage pour ne pas introduire de distorsion. Ainsi, dans une configuration avantageuse, pour une addition comprise strictement entre + 3,50 et + 6,50 dioptries, la puissance équivalente résiduelle dans la zone de centrage après correction de l'amétropie pourra être comprise au sens large entre +0,50 et +0,75 dioptries.

Selon une variante, la distance entre la zone de centrage et le point central de la zone de référence pour la vision de loin est sensiblement comprise entre 8 et 12 mm.

Selon une variante, la lentille ophtalmique progressive comprend une face avant sphérique et une face arrière complexe, correspondant à une technique classique de fabrication dite free form (ou de surfaçage numérique).

Selon une variante, la lentille ophtalmique progressive comprend une face avant complexe et une face arrière sphéro-cylindrique, correspondant à une technique classique de fabrication du verre.

Selon une variante, la lentille ophtalmique progressive comprend une face avant face avant complexe et une face arrière complexe.

## BREVE DESCRIPTION DES FIGURES

D'autres caractéristiques et avantages de l'invention apparaîtront à la lecture de la description qui suit, illustrée par les figures sur lesquelles :

- La figure 1 (déjà décrite), une vue de profil générale d'une lentille ophtalmique progressive selon l'art antérieur;
- La figure 2 (déjà décrite), une illustration schématique d'une cartographie d'une lentille ophtalmique progressive selon l'art antérieur ;
- Les figures 3A et 3B (déjà décrites), une illustration schématique d'une cartographie d'une lentille ophtalmique progressive et le profil correspondant de puissance sphérique totale le long de la ligne méridienne pour une lentille ophtalmique progressif selon l'art antérieur;
- Les figures 4A et 4B, une illustration schématique d'une cartographie d'une lentille ophtalmique progressive et le profil correspondant de puissance équivalente totale le long de la ligne méridienne pour une lentille ophtalmique progressive selon un exemple de réalisation de l'invention ;
- Les figures 5A et 5B, des profils de puissance équivalente le long de la ligne méridienne des faces avant et arrière, selon un premier exemple de réalisation ;
- Les figures 6A et 6B, des profils de puissance équivalente le long de la ligne méridienne des faces avant et arrière, selon un deuxième exemple de réalisation ;
- Les figures 7A et 7B, des profils de puissance équivalente le long de la ligne méridienne des faces avant et arrière, selon un troisième exemple de réalisation.

## DESCRIPTION DETAILLEE

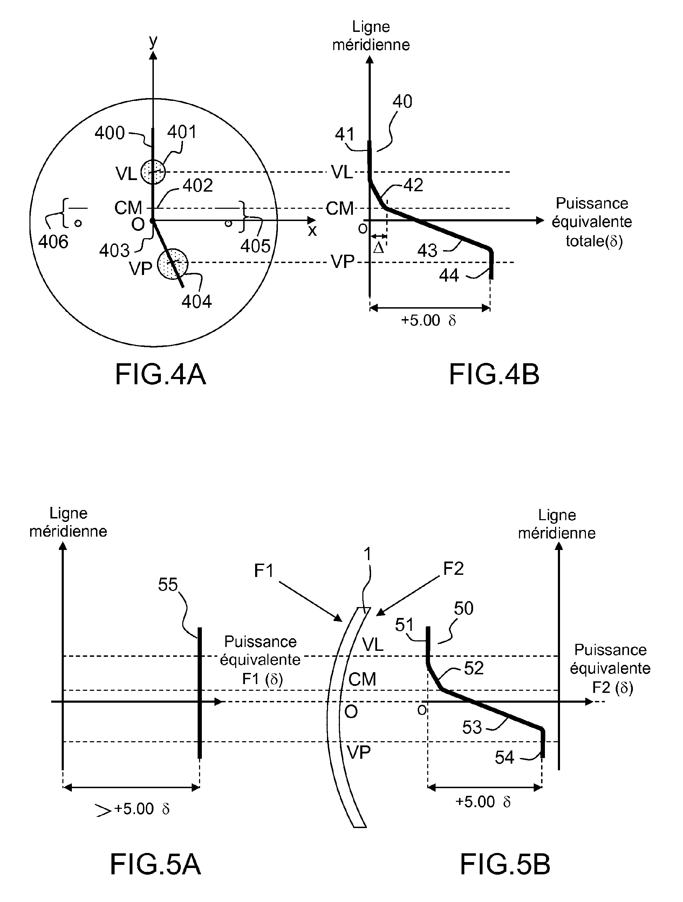

Les figures 4A et 4B illustrent respectivement la cartographie de l'une des deux faces avant ou arrière d'un verre ophtalmique progressif selon un exemple de réalisation de l'invention et l'allure de la puissance équivalente totale (puissance équivalente du verre) le long de la ligne méridienne. Contrairement aux lentilles ophtalmiques progressives de l'art antérieur, on s'intéresse à la puissance équivalente et non plus seulement à la puissance sphérique car des défauts de cylindre peuvent être tolérés même le long de la ligne méridienne, ces défauts contribuant à la puissance équivalente totale.

L'exemple est montré pour un patient emmétrope, c'est-à-dire ne présentant ni myopie, ni hypermétropie.

Le point CM (référencé 402 sur la figure 4A) est défini comme précédemment pour chaque face par le point traversé par une direction du regard sensiblement horizontale du patient lorsque le verre ophtalmique est détouré et monté sur une monture et que le patient porteur de la monture est debout et regarde au loin droit devant lui. Il s'agit sur chaque face du point appelé « croix de montage » par l'opticien, ce point étant repéré précisément par le fabriquant du verre ophtalmique progressif. La zone qui relie les points CM des deux faces est appelée zone de centrage de la lentille ophtalmique progressive dans la présente description. Comme précédemment, on retrouve sur la cartographie du verre le point O de référence prismatique (référencé 403) et les zones de référence 401 et 404 respectivement dites de vision de loin et de vision de près, délimitées par les cercles de centre VL et VP respectivement, qui peuvent être utilisées par l'opticien pour procéder à la mesure de la puissance optique du verre définie par le triplet ($Sph_T$, $Cyl_T$, $Axe_T$), par exemple au moyen par exemple d'un frontofocomètre. Comme précédemment, la ligne méridienne 400 relie les points VL, CM, O, VP.

La figure 4B représente selon un exemple la puissance sphérique totale 40 mesurée le long de la ligne méridienne 400. Bien que le patient soit emmétrope, on observe sur la courbe 40 une puissance équivalente totale non nulle au niveau de la croix de montage CM. Sur la figure 4B, on a noté $\Delta$ la valeur de la puissance équivalente totale résiduelle, c'est-à-dire l'écart entre la puissance équivalente procuré par le verre en ce point et la puissance équivalente totale attendue pour la correction de l'amétropie éventuelle du patient (la puissance équivalente totale attendue étant nulle dans l'exemple de la figure 4B). La déposante a montré qu'en imposant une puissance équivalente totale résiduelle non nulle au niveau de la croix de montage, par exemple comprise entre +0,25 et +1 dioptrie, avantageusement entre +0,50 et +0,75 dioptries, un patient présentant une déficience visuelle, par exemple de type DMLA, avec une acuité visuelle plafonnée à 0,6 quelle que soit la correction au loin, ne perdrait rien en acuité. Par contre, cette puissance équivalente résiduelle permet d'avoir en vision intermédiaire (segment 43 sur la figure 4B) et en vision de près (segment 44), une puissance équivalente totale plus importante que dans un verre progressif classique, donnant la possibilité d'une meilleure vision des objets à distance rapprochée.

Avantageusement, il est possible de conserver sur le verre une zone de référence de vision de loin 401 dans laquelle la puissance équivalente totale est égale à la puissance équivalente attendue pour la correction de l'amétropie du patient (0 dans cet exemple), à des fins de calibration du verre par exemple. Dans ce cas, la zone de vision de loin se trouve éloignée du point CM afin d'être dans une région du verre où la puissance équivalente totale est stable (segment 41, figure 4B). Entre la zone de référence de vision de loin 401 et le point CM, la puissance équivalente totale augmente de façon continue (segment 42). Plus la zone de vision de loin est éloignée du point CM, plus la variation de la puissance équivalente est faible. Là encore, la position de la zone de référence 401 répond à un compromis entre la recherche d'une proximité avec le point CM et la limitation de la variation possible de la puissance optique sur le segment 42 susceptible de générer un inconfort pour le patient. Contrairement à l'art antérieur (voir figure 3A), le point CM ne se trouve plus à la périphérie de la zone de référence de vision de loin mais éloigné de quelques millimètres, par exemple 4 à 6 mm, de telle sorte que le point VL centre de la zone de référence 401 soit situé entre 12 et 15 mm de point de référence prismatique O. Plus précisément, la déposante a montré que la variation de la puissance équivalente sur la distance entre la périphérie de la zone de vision de loin et CM pouvait être une fonction de l'Addition du verre. Cette variation peut être comprise entre 0.005*Add et 0.02*Add en dioptrie/mm, par exemple 0.01*Add. Par exemple, pour une addition de +5,00 dioptries et une puissance résiduelle de +0,25 dioptries, la variation maximale peut être de 0,05 dioptrie/mm et la zone VL peut donc débuter au minimum 5 mm au dessus de la CM (0,25/0,05 = 5 mm).

Pour un patient ayant une vision normale, une addition strictement supérieure à +3,50 dioptries présente peu d'intérêt. En effet, pour la correction de la Presbytie uniquement, les additions classiques comprises au sens large entre +0,75 dioptries et +3,50 dioptries permettent à un patient de retrouver une acuité visuelle en vision de près (« AV-VP ») proche de 1.0 (ou 10/10), l'acuité visuelle étant donnée par le rapport 5'/A où 5' correspond à 5 minutes d'arc et A correspond à l'angle sous-tendant la lettre la plus petite vue par le patient (voir par exemple Yves Le Grand, « optique physiologique », Masson, 1964, Tome 1, pages 86-87). Pour une vision normale, le sujet voit les lettres sous-tendues par un angle de 5', donc son AV-VP est de 5'/5' = 1.0. Pour une lecture fluide (caractère de journal), l'homme de l'art considère qu'une AV-VP minimale de 0,6 est nécessaire.

Pour un patient déficient visuel, l'acuité maximale est plafonnée par la déficience visuelle. Pour un déficient visuel percevant au mieux des lettres sous-tendues par un angle de 10' par exemple, l'AV-VP est de 5'/10' = 0,5. Ainsi, pour un patient déficient visuel dont l'AV-VP maximale est comprise entre 0,3 et 0,6 (patients souffrant de DMLA forme humide qui suivent un traitement, ou de DMLA forme sèche en début de maladie), la lecture de caractères devient difficile.

La déposante a montré qu'en augmentant l'addition à des valeurs strictement supérieures à +3.50 dioptries, par exemple comprises au sens large entre +4.00 dioptries et +6.50 dioptries, on génère un agrandissement des caractères du texte. Cet effet, couplé à l'effet de loupe généré par le facteur de forme du verre progressif (voir Yves Le Grand, « optique physiologique », Masson, 1964, Tome 1, page 33) permet de diminuer le seuil d'acuité visuelle en vision de près au-deçà duquel la lecture est fluide, ou autrement dit, d'augmenter l'acuité visuelle du patient déficient visuel lorsque celui ci regarde dans la zone de vision de près.

Plus précisément, le gain en acuité visuelle d'un patient déficient visuel peut être déterminé de la façon suivante. Pour un patient emmétrope presbyte pur présentant par ailleurs une vision normale, une addition de +3,50 dioptries permet de recouvrer une AV-VP de 1.0, à une distance de lecture égale à la distance focale de la lentille de puissance +3,50 dioptries, soit à une distance de 28 cm environ (100/3,5). Si un patient déficient visuel présentant la même presbytie mais une déficience visuelle par exemple de 0,4 porte ces mêmes verres, il lui sera impossible d'avoir une lecture fluide de caractères à la distance de lecture de 28 cm. Avec une addition de +5.00 dioptries par exemple, la distance de lecture passe à 20 cm. Or en passant d'une distance de lecture de 28 cm à 20 cm, l'angle sous lequel sont vues les lettres augmente donc de 40%. Par ailleurs, lorsqu'on produit un verre progressif avec une très forte addition (> +3,50 dioptries), il est nécessaire d'augmenter l'épaisseur de matière dans le bas du verre du fait de l'augmentation de la courbure ; cette augmentation d'épaisseur (également appelé facteur de forme de la lentille) produit par effet loupe un surcroit de grossissement évalué à 10% dans un verre progressif d'addition +5,00. Le gain d'acuité visuel en vision de près, directement lié au grossissement en angle, est donc de 50% avec un verre d'addition +5,00 et le patient qui présentait une AV-VP de 0,4 voit son AV-VP passer à 0,6, ce qui lui permet une lecture fluide.

Le tableau ci-dessus (Table 1) montre ainsi les grossissements en angle obtenus pour différents exemples d'additions, qui tiennent compte à la fois du grossissement liée à la diminution de la distance de lecture et au facteur de forme.

Table 1

| Addition (dioptries) | Distance de lecture | Gain en angle (dû à la distance de lecture) | Gain en angle (dû au facteur de forme) | Gain total sur AV-VP |
|---|---|---|---|---|
| +3,50 | 28,6 cm | 0,0% | 0,0% | 0,0% |
| +4,00 | 25,0 cm | 14,3% | 3,0% | 17,3% |
| +4,50 | 22,2 cm | 28,6% | 6,0% | 34,6% |

(suite)

| Addition (dioptries) | Distance de lecture | Gain en angle (dû à la distance de lecture) | Gain en angle (dû au facteur de forme) | Gain total sur AV-VP |
|---|---|---|---|---|
| +5,00 | 20,0 cm | 42,9% | 10,0% | 52,9% |
| +5,50 | 18,2 cm | 57,1% | 13,0% | 70,1% |
| +6,00 | 16,7 cm | 71,4% | 16,0% | 87,4% |
| +6,50 | 15,4 cm | 85,7% | 20,0% | > 100% |

A partir du tableau ci-dessus, et de façon générale en prenant compte à la fois du grossissement angulaire dû à la diminution de la distance de lecture et dû à l'effet de loupe généré par le facteur de forme, on peut estimer l'addition nécessaire pour un patient déficient visuel afin qu'il retrouve une acuité visuelle en vision de près lui permettant une lecture fluide, c'est-à-dire une acuité visuelle de 0,6 (ou 6/10) au moins.

Ainsi, pour un patient déficient visuel présentant par exemple une AV-VP de 0,5, une addition de +4,00 est suffisante pour recouvrer une AV-VP proche de 0,6. Pour un patient déficient visuel présentant par exemple une AV-VP de 0,4, une addition de +5,00 permettra de recouvrer une AV-VP proche de 0,6. Enfin pour un patient déficient visuel présentant une AV-VP de 0,3, un gain de 100% est nécessaire pour recouvrer une AV-VP de 0,6. On voit à partir du tableau qu'un gain de 100% est atteint pour une addition strictement inférieure à +6,50 dioptries.

La déposante a montré qu'une façon de générer des verres ophtalmiques progressifs de très forte addition est d'introduire une puissance équivalente résiduelle au niveau de la zone de centrage (croix de montage).

Pour un patient emmétrope avec une vision normale possédant une acuité visuelle de 1,0 en vision de loin et en vision de près, on considère qu'une erreur de correction de +0,25 dioptries par exemple fait baisser sa vision à une acuité de 0,8, une erreur de +0,50 dioptries à une acuité de 0,64, une erreur de +0,75 dioptries à une acuité de 0,5, une erreur de +1,00 dioptries à une acuité visuelle de 0,4 ("règle de Swaine", Yves Le Grand, « Optique Physiologique », Masson, 1964). Un patient déficient visuel dont l'acuité maximale est comprise entre 0,3 et 0,6 peut donc supporter un défaut de puissance entre +0,50 dioptries et +1,00 dioptries, voire au-delà, au niveau de la croix de montage sans que cela dégrade son acuité visuelle puisque son acuité visuelle est de toute façon plafonnée.

Cependant, la déposante a montré que des valeurs supérieures à +0,75 dioptries au niveau de la croix de montage conduisent à l'apparition d'effets de distorsion optique visibles dans la zone du verre prévue pour la vision de loin. Ces effets de distorsion peuvent introduire des déformations des lignes verticale et horizontale gênantes pour le patient. Il est ainsi avantageux de limiter à +0,75 dioptries la puissance équivalente résiduelle au niveau de la croix de montage.

De plus, une puissance équivalente résiduelle comprise entre +0,50 dioptries et +0,75 dioptries correspond à une proximité de 2 m (+0,50 dioptries) à 1,33m (+0,75 dioptries). Cette distance est assez intéressante au quotidien, car elle aide le patient déficient visuel - à mieux reconnaitre les visages de ses interlocuteurs, à mieux percevoir les trottoirs et marche d'escalier. Ainsi, dans la vie quotidienne, il est intéressant pour des patients déficients visuels d'améliorer la vision proche de 2 m plutôt que la vision à 20 m est au-delà, les patients déficients visuels ne conduisant pas.

Afin de limiter la puissance résiduelle au niveau de la croix de montage, on limite la pente de variation moyenne de la puissance résiduelle entre la zone de centrage 402 et le point central VL de la zone de référence pour la vision de loin 401, comme cela est visible sur la figure 4B. Pour cela, la pente de variation moyenne entre la zone de centrage 402 et le point central VP de la zone de référence pour la vision de près 404 pourra être plus forte que la pente de variation moyenne entre la zone de centrage 402 et le point central VL de la zone de référence pour la vision de loin 401.

Les figures 5 à 7 illustrent des variantes de réalisation d'un verre permettant d'obtenir une puissance équivalente totale du type de celle représentée sur la figure 4B. Pour chaque cas, on a représenté la puissance équivalente mesurée sur la ligne méridienne de la face avant F1 (figures 5A, 6A, 7A) et la puissance équivalente mesurée sur la ligne méridienne de la face arrière F2 (figures 5B, 6B, 7B).

Dans l'exemple des figures 5A et 5B, la face avant F1 est sphérique (puissance équivalente 55 égale à la puissance sphérique, constante et positive) et la face arrière F2 est complexe, progressive, d'addition donnée mesurée entre la zone de référence de vision de loin de centre VL et la zone de référence de vision de près de centre VP, par exemple l'addition est de +5,00. Le verre ophtalmique 1 est par exemple réalisé par la technologie connue de surfaçage numérique (également appelée technologie « Free form »). La puissance équivalente de la face avant est supérieure à l'addition, ce qui permet d'éviter les inversions de courbure et de faciliter ainsi la fabrication en réduisant le nombre d'outils nécessaires pour le fraisage. Dans le cas d'un patient emmétrope, la somme des puissances équivalentes mesurées sur chaque verre dans les zones de référence de vision de loin est nulle, tandis qu'une puissance équivalente résiduelle existe au point CM tel que défini précédemment.

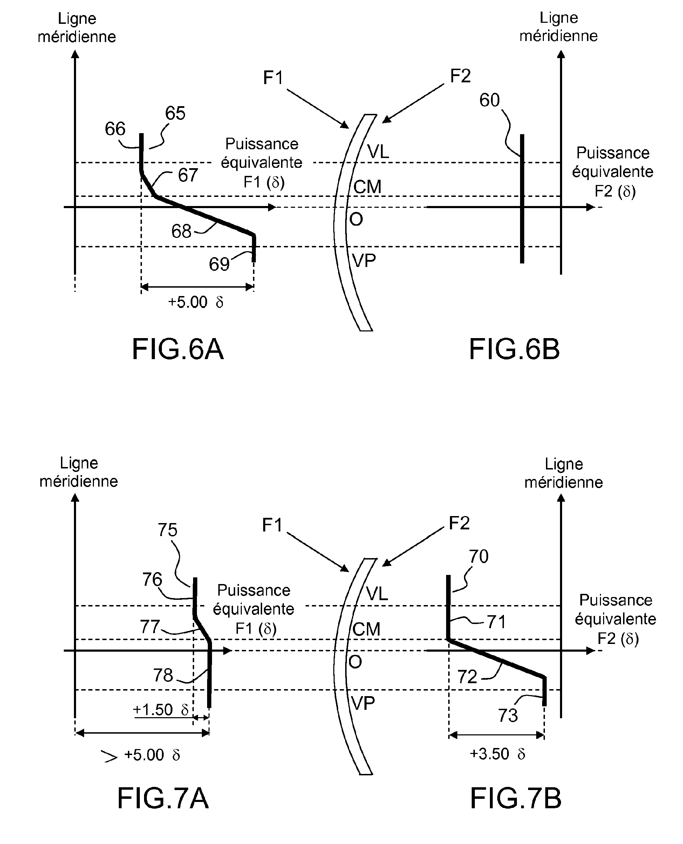

L'exemple des figures 6A et 6B illustre un mode de réalisation « à l'ancienne » comprenant une face avant F1 progressive addition donnée, par exemple +5.00, réalisée par moulage, et une face arrière sphéro-cylindrique (correspondant généralement à puissance requise pour la correction de l'amétropie).

L'exemple des figures 7A et 7B illustre un mode de réalisation mixte, dans lequel la puissance équivalente optique est répartie sur les deux faces F1 et F2 du verre. L'homme de l'art pourra par exemple utiliser un palet semi-fini classique comportant une face avant progressive réalisée par moulage d'addition de +1.50, complétée par une face arrière progressive réalisé par technique « Freeform » avec une addition de +3.50.

Bien que décrite à travers un certain nombre d'exemples de réalisation, la lentille ophtalmique progressive décrite dans la présente description peut comprendre différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Revendications**

1. Lentille ophtalmique progressive (1) pour patient souffrant de déficience visuelle comprenant :

   - Une zone de centrage (402), ponctuelle ou quasi-ponctuelle, définie par la région de la lentille destinée, après montage de la lentille dans une monture d'une paire de lunettes, à être traversée par une direction du regard sensiblement horizontale d'un porteur lorsque ce porteur est debout et regarde au loin droit devant lui,
   - Une zone de référence pour la vision de près (404), définie dans une région inférieure de la lentille par rapport à la zone de centrage (402), la puissance équivalente variant de façon continue sur une ligne méridienne (400) entre la zone de centrage (402) et un point central (VP) de la zone de référence pour la vision de près (404),
   - une zone de référence pour la vision de loin (401), définie dans une zone supérieure de la lentille par rapport à la zone de centrage (402), dans laquelle la puissance équivalente résiduelle après correction de l'amétropie est inférieure à 0,25 dioptrie, **caractérisée en ce que** :
   - l'addition définie par la différence entre la puissance équivalente totale mesurée au niveau de la zone de référence pour la vision de près (404) et la puissance équivalente totale mesurée au niveau de la zone de référence pour la vision de loin (401) est comprise strictement entre + 3,50 et +6,50,
   - la puissance équivalente résiduelle dans la zone de centrage (402) après correction de l'amétropie est comprise entre +0,25 et +1 dioptrie, et
   - la puissance équivalente varie de façon continue entre la zone de centrage (402) et un point central (VL) de la zone de référence pour la vision de loin (401).

2. Lentille ophtalmique progressive selon la revendication 1, dans laquelle la puissance équivalente résiduelle dans la zone de centrage après correction de l'amétropie est comprise au sens large entre +0,50 et +0,75 dioptrie.

3. Lentille ophtalmique progressive selon l'une quelconque des revendications précédentes, dans laquelle l'addition est comprise au sens large entre + 4.00 et + 6.00 dioptries.

4. Lentille ophtalmique progressive selon l'une quelconque des revendications précédentes, dans laquelle la distance entre la zone de centrage et le point central (VL) de la zone de référence pour la vision de loin (401) est sensiblement comprise entre 8 et 12 mm.

5. Lentille ophtalmique progressive selon l'une quelconque des revendications précédentes, dans laquelle la puissance équivalente varie avec une pente de variation moyenne entre la zone de centrage (402) et le point central (VP) de la zone de référence pour la vision de près (404) plus forte que la pente de variation moyenne entre la zone de centrage (402) et le point central (VL) de la zone de référence pour la vision de loin (401).

6. Lentille ophtalmique progressive selon l'une quelconque des revendications précédentes comprenant une face avant sphérique et une face arrière complexe.

7. Lentille ophtalmique progressive selon l'une quelconque des revendications 1 à 5, comprenant une face avant complexe et une face arrière sphéro-cylindrique.

8. Lentille ophtalmique progressive selon l'une quelconque des revendications 1 à 5, comprenant une face avant face avant complexe et une face arrière complexe.

ART ANTERIEUR

FIG.1

ART ANTERIEUR

FIG.2

ART ANTERIEUR

FIG.3A

ART ANTERIEUR

FIG.3B

FIG.4A

FIG.4B

FIG.5A

FIG.5B

Ligne
méridienne

66 65
67
68
69
+5.00 δ

Puissance
équivalente
F1 (δ)

F1 F2

VL
CM
O
VP

60

Ligne
méridienne

Puissance
équivalente
F2 (δ)

## FIG.6A

## FIG.6B

Ligne
méridienne

75
76
77
78
+1.50 δ
> +5.00 δ

Puissance
équivalente
F1 (δ)

F1 F2

VL
CM
O
VP

70
71
72
73
+3.50 δ

Ligne
méridienne

Puissance
équivalente
F2 (δ)

## FIG.7A

## FIG.7B

Europäisches
Patentamt

European
Patent Office

Office européen
des brevets

**RAPPORT DE RECHERCHE EUROPEENNE**

Numéro de la demande

EP 13 18 6590

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 428 834 A1 (SEIKO EPSON CORP [JP]) 14 mars 2012 (2012-03-14) * figures 1A, 2D * * alinéas [0013], [0034], [0046], [0058] * ----- | 1-8 | INV. G02C7/06 |
| X | WO 98/12590 A1 (ESSILOR INT [FR]; BAUDART THIERRY [FR]; BOURDONCLE BERNARD [FR]; LALOU) 26 mars 1998 (1998-03-26) * figure 10 * ----- | 1-8 | |
| X | US 5 270 745 A (PEDRONO CLAUDE [FR]) 14 décembre 1993 (1993-12-14) * figure 5 * ----- | 1-8 | |
| X | WO 96/13748 A2 (RODENSTOCK OPTIK G [DE]; ALTHEIMER HELMUT [DE]; BARTH RUDOLF [DE]; BAU) 9 mai 1996 (1996-05-09) * figure 46 * ----- | 1-8 | |
| X | US 4 838 674 A (DUFOUR MAURICE [FR]) 13 juin 1989 (1989-06-13) * figure 4 * ----- | 1-8 | DOMAINES TECHNIQUES RECHERCHES (IPC) G02C |
| X | US 5 949 519 A (LE SAUX GILLES [FR] ET AL) 7 septembre 1999 (1999-09-07) * figure 8 * ----- | 1-8 | |

Le présent rapport a été établi pour toutes les revendications

| Lieu de la recherche | Date d'achèvement de la recherche | Examinateur |
|---|---|---|
| Munich | 8 janvier 2014 | de Lajarte, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 18 6590

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-01-2014

| Document brevet cité au rapport de recherche | | Date de publication | Membre(s) de la famille de brevet(s) | | Date de publication |
|---|---|---|---|---|---|
| EP 2428834 | A1 | 14-03-2012 | CN 102402022 A<br>EP 2428834 A1<br>JP 2012063397 A<br>US 2012062837 A1 | | 04-04-2012<br>14-03-2012<br>29-03-2012<br>15-03-2012 |
| WO 9812590 | A1 | 26-03-1998 | AU 729511 B2<br>AU 4212197 A<br>BR 9711399 A<br>CA 2265705 A1<br>DE 69714273 D1<br>DE 69714273 T2<br>EP 0927377 A1<br>ES 2181024 T3<br>FR 2753805 A1<br>JP 4955749 B2<br>JP 2001503155 A<br>JP 2010055122 A<br>US 6318859 B1<br>WO 9812590 A1 | | 01-02-2001<br>14-04-1998<br>17-08-1999<br>26-03-1998<br>29-08-2002<br>27-03-2003<br>07-07-1999<br>16-02-2003<br>27-03-1998<br>20-06-2012<br>06-03-2001<br>11-03-2010<br>20-11-2001<br>26-03-1998 |
| US 5270745 | A | 14-12-1993 | AU 650408 B2<br>AU 2829692 A<br>BR 9204389 A<br>CA 2082615 A1<br>FR 2683642 A1<br>GB 2261527 A<br>IT 1258707 B<br>JP 2859054 B2<br>JP H0643403 A<br>JP H09179074 A<br>US 5270745 A | | 16-06-1994<br>13-05-1993<br>18-05-1993<br>13-05-1993<br>14-05-1993<br>19-05-1993<br>27-02-1996<br>17-02-1999<br>18-02-1994<br>11-07-1997<br>14-12-1993 |
| WO 9613748 | A2 | 09-05-1996 | AU 710343 B2<br>AU 3800195 A<br>EP 0754312 A1<br>JP 4024851 B2<br>JP H09507925 A<br>US 5880810 A<br>WO 9613748 A2 | | 16-09-1999<br>23-05-1996<br>22-01-1997<br>19-12-2007<br>12-08-1997<br>09-03-1999<br>09-05-1996 |
| US 4838674 | A | 13-06-1989 | AU 597555 B2<br>AU 1870488 A<br>BR 8803369 A<br>CA 1287993 C<br>DE 3822376 A1<br>FR 2617989 A1 | | 31-05-1990<br>12-01-1989<br>31-01-1989<br>27-08-1991<br>19-01-1989<br>13-01-1989 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 13 18 6590

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-01-2014

| Document brevet cité<br>au rapport de recherche | | Date de<br>publication | Membre(s) de la<br>famille de brevet(s) | | Date de<br>publication |
|---|---|---|---|---|---|
| | | | GB | 2206978 A | 18-01-1989 |
| | | | IT | 1223668 B | 29-09-1990 |
| | | | JP | H0520729 B2 | 22-03-1993 |
| | | | JP | S6432227 A | 02-02-1989 |
| | | | SG | 121392 G | 29-01-1993 |
| | | | US | 4838674 A | 13-06-1989 |
| US 5949519 | A | 07-09-1999 | AU | 739216 B2 | 04-10-2001 |
| | | | AU | 8934698 A | 06-05-1999 |
| | | | BR | 9804423 A | 03-11-1999 |
| | | | CA | 2250571 A1 | 16-04-1999 |
| | | | CN | 1215843 A | 05-05-1999 |
| | | | DE | 69801630 D1 | 18-10-2001 |
| | | | DE | 69801630 T2 | 27-06-2002 |
| | | | EP | 0911673 A1 | 28-04-1999 |
| | | | ES | 2163241 T3 | 16-01-2002 |
| | | | FR | 2769998 A1 | 23-04-1999 |
| | | | JP | H11194307 A | 21-07-1999 |
| | | | JP | 2011095783 A | 12-05-2011 |
| | | | US | 5949519 A | 07-09-1999 |

EPO FORM P0460

Pour tout renseignement concernant cette annexe : voir Journal Officiel de l'Office européen des brevets, No.12/82

**EP 2 713 198 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2924824

- EP 2428834 A

**Littérature non-brevet citée dans la description**

- la dioptrique de l'oeil et sa correction. **YVES LE GRAND.** Optique Physiologique. 1964, vol. 1
- **YVES LE GRAND.** optique physiologique. Masson, 1964, vol. 1, 86-87

- **YVES LE GRAND.** optique physiologique. Masson, 1964, vol. 1, 33
- règle de Swaine. **YVES LE GRAND.** Optique Physiologique. Masson, 1964